(19) Europäisches Patentamt

European Patent Office

Office européen des brevets

(11) EP 4 372 627 A1

(12) EUROPEAN PATENT APPLICATION

(43) Date of publication:
22.05.2024 Bulletin 2024/21

(21) Application number: 23209864.0

(22) Date of filing: 14.11.2023

(51) International Patent Classification (IPC):
G06N 10/20 (2022.01)

(52) Cooperative Patent Classification (CPC):
G06N 10/20; G06N 10/40

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.11.2022 US 202217987749

(71) Applicant: Trimble Inc.
Westminster, CO 80021 (US)

(72) Inventors:
• VOLLATH, Ulrich
Westminster (US)
• KASIRAJAN, Venkateswaran
Westminster (US)

(74) Representative: AWA Sweden AB
Box 45086
104 30 Stockholm (SE)

(54) PERSISTENT AND PARALLEL EMBEDDINGS FOR QUANTUM ANNEALERS

(57) Computation of optimal embeddings for an optimization problem to be solved using a quantum annealer can be accelerated by pre-computing optimal embeddings in a target graph corresponding to a quantum processor architecture of clique graphs (or fully-connected network graphs) having various numbers of nodes. Pre-computed embeddings can be stored in a library. To solve an optimization problem, a clique-graph embedding of appropriate size can be retrieved from the library and modified to match the problem to be solved. The modified embedding can be executed using an appropriate quantum annealer.

FIG. 5

EP 4 372 627 A1

## Description

BACKGROUND

This disclosure relates to quantum annealers and in particular to generation of embeddings for quantum annealers.

Optimization problems are encountered in a variety of situations. Examples of optimization problems include path planning for agricultural or construction machines, route planning for a delivery vehicle, job scheduling to minimize idle resources and/or avoid resource conflicts, cost optimization, and so on. Many types of optimization problems can be formulated as quadratic binary optimization (QUBO) problems. QUBO problems are computationally difficult, and solving such problems using conventional binary digital computers (also referred to as "classical computers") generally requires significant computational time.

Recently, a type of special-purpose quantum computer, referred to as a "quantum annealer," has been developed that can solve large QUBO problems in significantly less time than conventional binary digital computers. Quantum annealers include a quantum processor that implements a network of qubits. Quantum annealers operate by initializing the qubits into a "ground" state, then gradually introducing single-qubit biases and couplings between qubits in accordance with the particular QUBO problem to be solved. The process of determining the biases and couplings to use in a particular quantum processor to represent a particular problem is referred to as "minor embedding," or just "embedding," and is performed by a classical computer prior to initializing the quantum annealer. Determining optimal embeddings for a given problem in a given quantum processor is, however, another computationally difficult problem for conventional binary digital computers, and computing an embedding can take significantly more time than executing the embedding.

SUMMARY

Described herein are embodiments of methods and systems that can accelerate computation of optimal embeddings for an optimization problem in a quantum annealer. In various embodiments, the architecture of a quantum processor can be characterized using a "target graph," which can be an undirected network graph in which the physical qubits are mapped to nodes in the network graph and available connections between qubits map to edges connecting pairs of nodes. The target graph can be specific to a particular instance of quantum processor hardware or applicable to a number of quantum processors having the same arrangement of qubits and connections. Given a target graph, a library of optimized embeddings of a selected set of undirected network graphs in the target graph can be precomputed and stored. For instance, the library can include an optimized embedding of a clique graph in the target hardware for clique graphs having different numbers of nodes (n), from a minimum number ($n_{min}$) to a maximum number ($n_{max}$). As used herein, a "clique graph," or "fully-connected network graph," is an undirected network graph in which each node in the network is adjacent to each other node; in other words, for each pair of nodes, there is an edge directly connecting the nodes. To generate an embedding for a particular optimization problem represented by a network graph having a number of nodes $n = n_0$, the clique graph of size $n_0$ can be retrieved from the library and modified, e.g., by removing edges and/or modifying edge weights according to the particular problem to be solved.

Some embodiments relate to methods of using a quantum annealer to solve an optimization problem. A computer system (which can be a classical computer system) can obtain an input representing a particular optimization problem, where the particular optimization problem maps to an input network graph having a number ($n_0$) of nodes. The computer system can access a library of precomputed embeddings that includes a precomputed embedding of each of a plurality of clique graphs in a target graph representing a quantum processor architecture (e.g., a quantum annealer architecture), where different clique graphs in the plurality of clique graphs have different numbers of nodes. The computer system can retrieve from the library a first precomputed embedding of a clique graph having the number $n_0$ of nodes and can execute an operation to modify the first precomputed embedding based on the input network graph, thereby computing a problem-specific embedding. The computer system can provide the problem-specific embedding to a quantum annealer system having a quantum processor with the architecture represented by the target graph and can receive a result from the quantum annealer system, where the result represents a solution to the particular optimization problem.

In some embodiments, the library of precomputed embeddings can be computed by the computer system prior to obtaining the input. For instance, for each of a plurality of numbers (n), the computer system can compute an embedding in the target graph of a clique graph having the number n of nodes and can the computed embeddings in the library. plurality of numbers $n$ includes all integers $n$ for which $n_{min} \leq n \leq n_{max}$, where $n_{min}$ is a preselected minimum number and $n_{max}$ is a largest number for which an embedding of a clique graph having $n_{max}$ nodes in the target graph exists.

In some embodiments, a target graph can be specific to a particular instance of a quantum processor. Where this is the case, the library can include precomputed embeddings for two or more different instances of the quantum processor, and accessing the library can include specifying one particular instance of the quantum processor.

In some embodiments, a target graph can be specific to a particular quantum processor architecture. Where this is the case, the library can include precomputed embeddings for two or more different quantum processor architectures, and accessing the library can include specifying one particular quantum processor architecture.

Some embodiments relate to computer-implemented methods of optimizing embeddings for a quantum processor (e.g., a quantum annealer). A computer system (which can be a classical computer system) can obtain a first target graph representing a first quantum processor architecture. The computer system can compute a first set of optimized embeddings, where computing the first set of optimized embeddings includes, for each of a plurality of integer numbers $n$, computing, by the computer system, an optimized embedding in the first target graph of a clique graph having the number n of nodes. The computer system can store the first set of optimized embeddings in a library.

In some embodiments, the computer system can receive a request from a client for a stored embedding, the request specifying a number $n_0$ of nodes. The computer system can retrieve the optimized embedding having the number $n_0$ of nodes from the library and can communicate the optimized embedding having the number $n_0$ of nodes to the client.

In some embodiments, the first target graph can represent a first specific quantum processor having the first quantum processor architecture, and the method can also include obtaining, by the computer system, a second target graph representing a second specific quantum processor having the first quantum processor architecture; computing a second set of optimized embeddings, where computing the second set of optimized embeddings can include, for each of a plurality of integer numbers $n$, computing an optimized embedding in the second target graph of a fully connected network graph having the number n of nodes; and storing the second set of optimized embeddings in the library. A request received from a client for a stored embedding can specify a number $n_0$ of nodes and a particular quantum processor. The computer system can select one of the first set or the second set of optimized embeddings based on the particular quantum processor specified in the request, retrieve the optimized embedding having the number $n_0$ of nodes from the selected set of optimized embeddings, and communicate the optimized embedding having the number $n_0$ of nodes to the client.

In some embodiments, the computer system can also: obtain a second target graph representing a second quantum processor architecture; compute a second set of optimized embeddings, where computing the second set of optimized embeddings includes, for each of a plurality of integer numbers $n$, computing an optimized embedding in the second target graph of a fully connected network graph having the number n of nodes; and store the second set of optimized embeddings in the library. A request received from a client for a stored embedding can specify a number $n_0$ of nodes and a particular quantum processor architecture. The computer system can select one of the first set or the second set of optimized embeddings based on the particular quantum processor architecture specified in the request, retrieve the optimized embedding having the number $n_0$ of nodes from the selected set of optimized embeddings, and communicate the optimized embedding having the number $n_0$ of nodes to the client.

In some embodiments, the methods can be implemented using computer systems that include a memory and a processor coupled to the memory. Such computer systems can be classical computer systems implementing binary digital logic. The processor can be configured, e.g., using program code, to perform the appropriate operations. Program code specifying appropriate operations in a format readable by the processor can be stored in various non-transitory computer readable storage media.

The following detailed description, together with the accompanying drawings, will provide a better understanding of the nature and advantages of the claimed invention.

BRIEF DESCRIPTION OF THE DRAWINGS

FIG. 1 shows an example of a network graph corresponding to a QUBO problem.

FIGs. 2A and 2B show a graph representation of quantum annealer architecture. FIG. 2A shows a graph representation for a single unit cell, and FIG. 2B shows a graph representation of a network of unit cells.

FIGs. 3A and 3B show an example of embedding for the architecture shown in FIGs. 2A and 2B.

FIG. 4 shows an example of an embedding of the network graph of FIG. 1 in a particular quantum annealer architecture.

FIG. 5 shows a simplified block diagram of a system according to some embodiments.

FIG. 6 shows a flow diagram of a process for generating a library of optimized embeddings for clique graphs of varying sizes according to some embodiments.

FIG. 7 shows a flow diagram of a process for computing an embedding for a specific optimization problem according to some embodiments.

DETAILED DESCRIPTION

The following description of exemplary embodiments of the invention is presented for the purpose of illustration and description. It is not intended to be exhaustive or to limit the claimed invention to the precise form described, and persons skilled in the art will appreciate that many modifications and variations are possible. The embodiments have been chosen and described in order to best explain the principles of the invention and its practical applications to thereby enable others skilled in the art to best make and use the invention in various embodiments and with various modifications as are suited to the particular use contemplated.

**Overview of quantum annealers**

This section is provided to introduce context and terminology relevant to understanding the present disclosure.
Optimization problems are encountered in a variety of situations. Examples of optimization problems include path planning for agricultural or construction machines, route planning for a delivery vehicle, job scheduling to minimize idle resources and/or avoid resource conflicts, cost optimization, and so on.
In many instances, optimization problems can be formulated as quadratic binary optimization (QUBO) problems. A QUBO problem can be defined by reference to a function $f_Q(\mathbf{x})$ given by:

$$f_Q(\mathbf{x}) = \sum_{i=1}^{n}\sum_{j=1}^{i} q_{ij} x_i x_j \,, \qquad (1)$$

where $\mathbf{x}$ is an $n$-dimensional vector of binary values (each $x_i$ can be either 0 or 1) and $q_{ij}$ are real-valued weights. The value of $n$ is sometimes referred to as the "size" of the problem. In matrix notation, the function can be expressed as:

$$f_Q(\mathbf{x}) = \mathbf{x}^{\mathrm{T}}\mathbf{Q}\mathbf{x} \,. \qquad (2)$$

Optimization entails finding a vector $\mathbf{x}^*$ that minimizes $f_Q(\mathbf{x})$, in other words:

$$\mathbf{x}^* = \arg\min f_Q(\mathbf{x}) \qquad (3)$$

In computational terms, solving Eq. (3) is an NP hard problem, and finding solutions using conventional binary digital computing techniques (also referred to as "classical" computing) can be computationally intensive.
In recent years, systems referred to as "quantum annealers" have emerged as an alternative to classical computing for the solution of QUBO problems. A "quantum annealer" refers to a category of special-purpose quantum computer that is designed to solve QUBO problems more efficiently than classical computers. A quantum annealer includes a quantum processor (sometimes referred to as a "QPU") that implements a set of qubits, where each qubit is a physical system that, when measured, can be in one of two discrete states that are mapped to values of logical-0 and logical-1. While the observable state is binary, a qubit can also exist in a superposition state, where both states have a non-zero probability of being observed. Examples of physical systems implementing qubits include currents in superconducting wire loops (with the direction of current flow corresponding to the state), atomic or nuclear spins (which can be up or down), and so on. A QPU may also include a source of bias (e.g., a magnetic field) that can induce a qubit that is initially in a superposition of states to favor one state or the other. The QPU may also include devices or circuitry that can selectably couple different qubits to each other, enabling the creation of quantum entanglement between qubits. Quantum entanglement results in correlations between the measured states of two or more qubits. In addition to one or more QPUs, a quantum annealer system can also include other components such as programmable control circuitry, interfaces, and so on. Examples of quantum annealers include various systems manufactured and operated by D-Wave Systems Inc. (headquartered in Burnaby, British Columbia, Canada). It should be understood that, while D-Wave systems are used as an example, embodiments described herein can be applied in connection with other quantum annealer systems.
For purposes of understanding the present disclosure, it suffices to understand that quantum annealers can be used to solve QUBO problems. For instance, Eq. (1) can be transformed via known mathematical operations to a Hamiltonian function of an Ising model, which has the form:

$$H(\sigma) = -\sum_{\langle i,j \rangle} J_{ij}\sigma_i\sigma_j - \mu \sum_j h_j\sigma_j \,, \qquad (4)$$

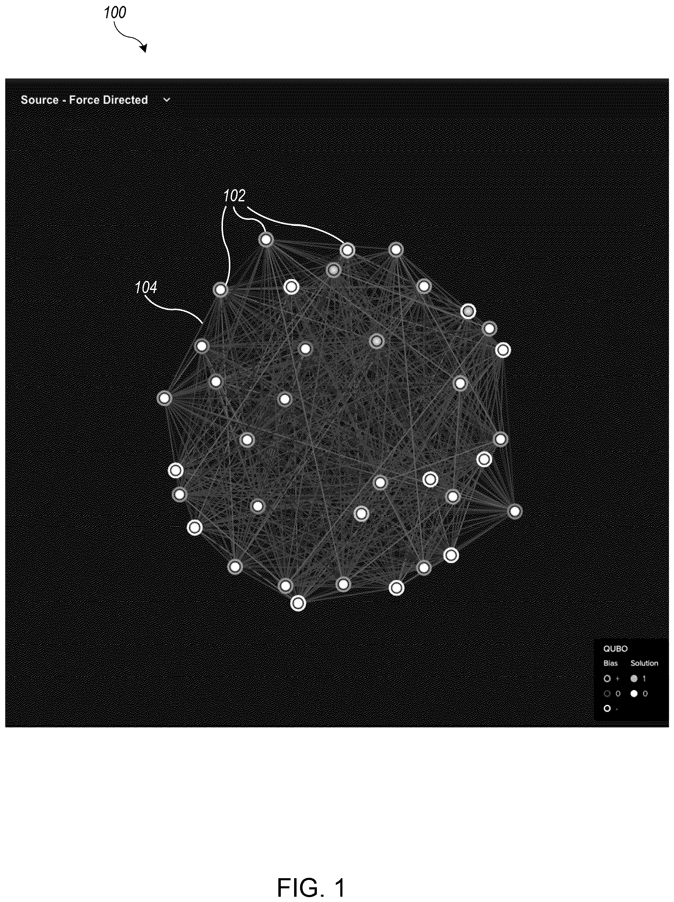

where $\sigma_j$ are spin variables (value +1 or -1) and $J_{ij}$ and $h_j$ are real-valued coefficients. The Hamiltonian function can be applied to a system of qubits in a quantum annealer. Eq. (1) or Eq. (4) can be modeled using an undirected network graph having a number ($n$) of interconnected nodes. FIG. 1 shows an example of a network graph 100 corresponding to a QUBO problem. Each node 102 corresponds to one of the components $x_i$ of vector **x** in Eq. (1), and the edge 104 connecting a pair of nodes $x_i$ and $x_j$ can be assigned weight $q_{ij}$. (For $q_{ii} \neq 0$, the node can be assigned a bias.)

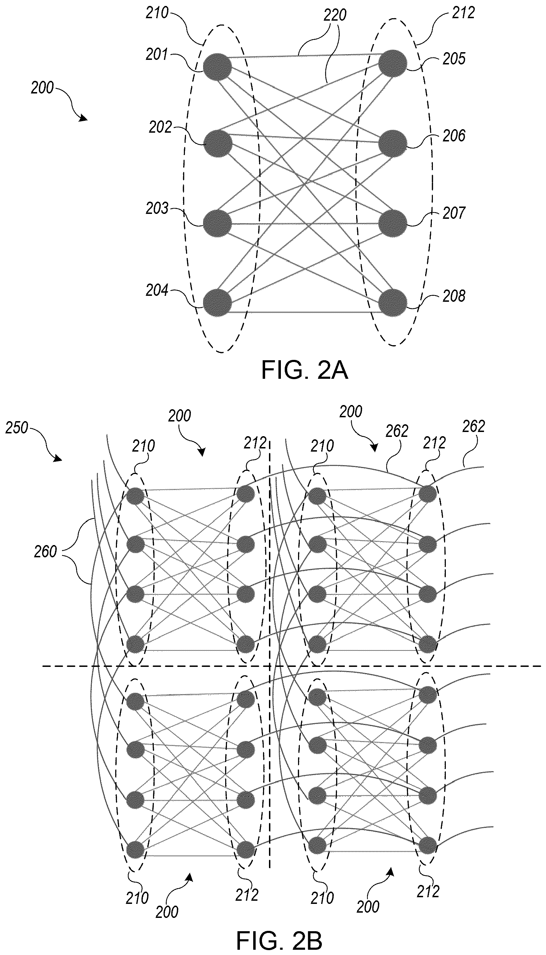

If a QPU provided a direct coupling between every pair of qubits, the Hamiltonian of Eq. (4) could be mapped directly onto the hardware of the quantum annealer, with each qubit being mapped to a spin $\sigma_j$, coefficients $h_j$ used to determine biases, and coefficients $J_{ij}$ used to determine coupling strengths. Existing QPUs, however, do not provide a direct coupling between every pair of qubits. Instead, each qubit has couplings to a limited number of neighboring qubits, and the number of qubits and configuration of couplings are architectural characteristics of a particular QPU. By way of example, FIG. 2A shows a graph representation of a unit cell 200 for a particular QPU architecture. Physical qubits 201-208 are represented by dots, and connectors 220 that couple qubits are represented as lines. In this example, eight qubits 201-208 are arranged in two columns 210, 212. Each qubit 201-204 in column 210 is coupled to each of the qubits 205-208 in the other column 212, but not to any other qubits 201-204 in column 210. Multiple unit cells can be coupled to form a larger network of interconnected qubits. FIG. 2B shows a graph representation of a network 250 of unit cells 200. Qubits in the left column 210 of a unit cell 200 are coupled to corresponding qubits of adjacent unit cell in a vertical direction, as indicted by lines 260. Qubits in the right column 212 of a unit cell 200 are coupled to corresponding qubits of adjacent unit cells in the horizontal direction, as indicated by lines 262. This pattern of connections between unit cells can be extended to any number of unit cells. It should also be understood that the graph representation shown in FIGs. 2A and 2B is schematic in nature and does not necessarily correspond to the physical layout of the QPU. The architecture shown in FIGs. 2A and 2B corresponds to the D-Wave "Chimera" architecture. It is used herein solely for purposes of illustrating certain concepts. More generally, any QPU architecture suitable for a quantum annealer can be represented using a network graph, and a graph representing a QPU is referred to herein as a "target graph."

Consequently, for a network-graph representation of a particular QUBO problem (referred to herein as a "QUBO graph"), the target graph of a particular QPU architecture might not provide enough direct connections between qubits to capture the network connectivity of the QUBO graph. To map a QUBO graph onto a target graph generally requires mapping one or more edges of the QUBO graph to a "chain" of connected qubits. To construct a chain, two qubits are identified as "node qubits" that correspond to nodes of the QUBO graph, and one or more other qubits are identified as "intermediary qubits" such that a series of connectors links one node via one or more intermediaries to the other. The process of mapping a QUBO graph onto a target graph for a QPU is sometimes referred to as "minor embedding," or just "embedding." An embedding of a QUBO graph in a target graph identifies particular qubits of the QPU as corresponding to nodes and intermediaries, as well as the biases and coupling weights to be applied.

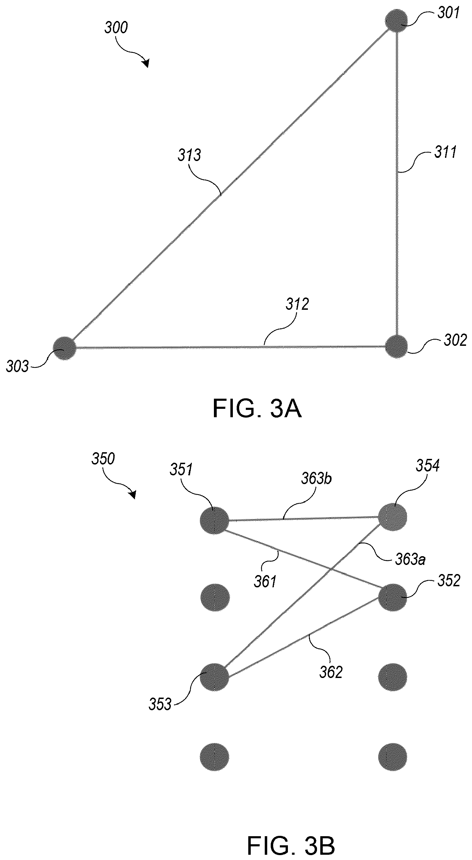

FIGs. 3A and 3B show a simple example an of embedding of a QUBO graph in unit cell 200 of FIG. 2A of the for the architecture shown in FIGs. 2A and 2B. FIG. 3A shows a QUBO graph 300. QUBO graph 300 has three nodes 301-303 connected to each other by edges 311-313. FIG. 3B shows an embedding of QUBO graph 300 in a target graph 350 corresponding to unit cell 200 of FIG. 2A. Nodes 301-303 of QUBO graph 300 are mapped to qubits 351-353, respectively, and edges 311, 312 are mapped to connections 361, 362, respectively. To map edge 313, a fourth qubit 354 is used as an intermediary, and edge 313 mapped to the chain of connections 363a and 363b.

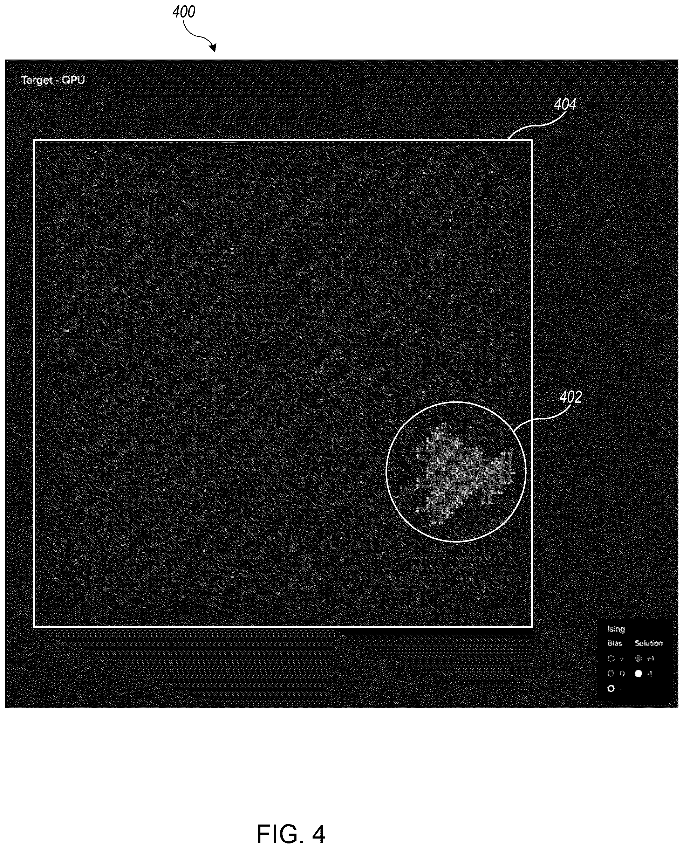

While FIGs. 3A and 3B show a simple example, it should be understood that for larger network graphs, embeddings can become quite complex. By way of illustration, FIG. 4 shows an example of an embedding of the network graph of in FIG. 1 in the D-Wave Chimera QPU architecture. The network graph is embedded in specific qubits in the circled region 402 of an array 404 of qubits within the QPU.

Once an embedding of a particular QUBO graph in a particular QPU is obtained, the quantum annealer can "execute" the embedding in the QPU to solve the optimization problem. For instance, the quantum annealer can initialize the QPU into a "ground" state, in which each of its qubits is in an equal superposition of the two observable states. Biases and coupling weights specified by the embedding are gradually introduced over a period of time (typically on the order of microseconds), during which the qubits ideally transition into a state corresponding to the lowest-energy state of the Ising Hamiltonian corresponding to the QUBO problem. At the end of this annealing period, the qubits are measured, and the (binary) measurement results represent a solution to the QUBO problem. In existing systems, the annealing process may be repeated multiple times for purposes of error detection and/or correction. Given an embedding, some existing quantum annealers can solve a QUBO problem in a time between less than a second and a few minutes. (The QPU itself may require only milliseconds to perform annealing; much of the solution time is spent in classical computing.)

**Reusable embeddings**

For a typical QUBO problem, there may be multiple possible embeddings in a specific target graph, but it is often that case that embeddings differ in quality. For instance, longer chains of intermediary qubits between node qubits can increase the probability of error in the annealing. Further complicating matters is that different QPUs constructed according to the same architecture may not behave in exactly the same way. For example, in a given instance of a QPU, some qubits may be "frozen" in a particular state (which may make them unusable), and some couplings may be more reliable than others. Such characteristics can be expected to vary from one QPU to the next. Thus, a target graph or an optimal embedding may be specific to a particular QPU instance.

Determining an optimal embedding is (like the QUBO problem itself) an NP-hard computational problem, and a solution can require hours of computational time on a classical computer. Spending hours generating an embedding that takes minutes to execute may not be desirable. Alternatively, an embedding can be computed quickly but may not be optimal.

Certain embodiments described herein relate to techniques for computing embeddings that can allow an optimized embedding for a particular QUBO graph to be computed quickly. As described below, a library of optimized embeddings of a selected set of network graphs in the target graph can be precomputed and stored. For instance, the library can include an optimized embedding of a clique graph in the target hardware for clique graphs having different numbers of nodes ($n$), from a minimum number ($n_{min}$) to a maximum number ($n_{max}$). As used herein, a "clique graph," also referred to as a "fully-connected network graph," is an undirected network graph in which each node in the network is adjacent to each other node; in other words, for each pair of nodes, there is an edge directly connecting the nodes. To generate an embedding for a particular QUBO graph having a network of $n = n_0$ nodes (which might or might not be fully connected), the embedding of the clique graph with $n_0$ nodes can be retrieved from the library and modified, e.g., by removing edges and/or modifying edge weights to correspond to the particular QUBO graph.

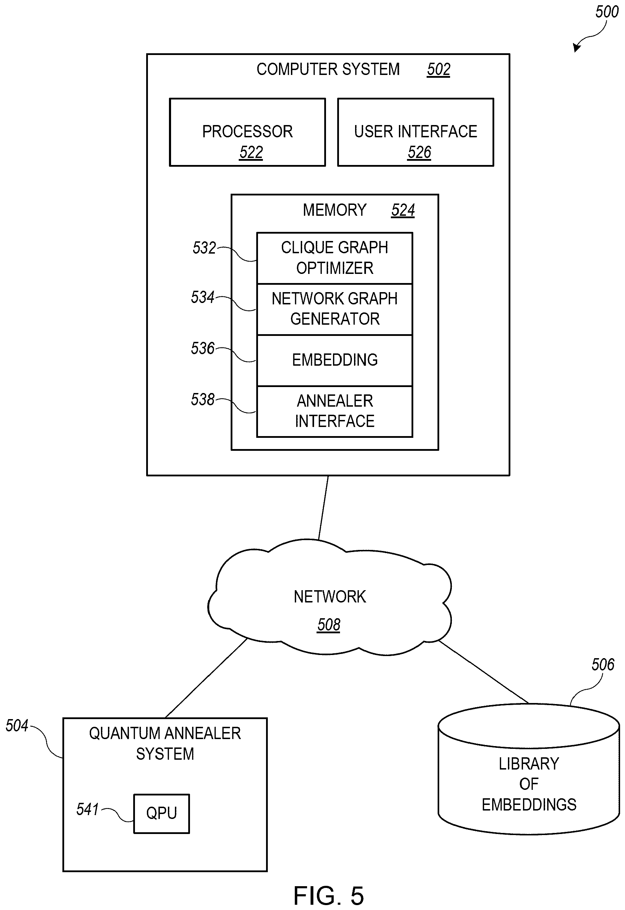

FIG. 5 shows a simplified block diagram of a system 500 according to some embodiments. System 500 can include a classical computer system 502, a quantum annealer system 504, and a library of embeddings 506 that communicate via a network 508, which can be, e.g., a local area network or the internet or other wide-area network. In some embodiments, different systems can be implemented using some or all of the same hardware, and network connections are not required.

Quantum annealer system 504 can include one or more instances of a QPU 541 (e.g., as described above), a control system (not shown), and a communication interface (not shown) that enables classical computer system 502 to communicate with quantum annealer system 504, e.g., to provide embeddings or other instructions and to receive results of annealing operations. In some embodiments, quantum annealer system 504 can also provide software and/or classical computing resources to facilitate computation of embeddings for QPU(s) 541. Examples of quantum annealer system 504 include various systems provided by D-Wave Systems Inc.; other quantum annealer systems can also be used.

Library of embeddings 506 can include a computer-readable storage medium that stores precomputed embeddings of various network graphs in target graph(s) of QPU(s) 541 of quantum annealer 504. For example, library 506 can store precomputed embeddings of clique graphs of various sizes, as described below. Depending on implementation, the target graphs (and embeddings) can be specific to a particular QPU or generally applicable to a particular QPU architecture. In some embodiments, library 506 can be provided using a server system that supports cloud-based data storage and retrieval.

Computer system 502 can be a classical computer system incorporating standard components such as a processor 522, memory subsystem 524, and user interface 526. Processor 522 can include one or more digital microprocessors or other programmable logic circuits capable of executing instructions. User interface 526 can include a combination of devices such as display screen, keyboard, pointing device, speakers, and any other device via which a user can interact with computer system 502. Memory subsystem 524 can include one or more computer-readable storage media (e.g., solid-state media such as flash memory, magnetic disk, optical storage media, etc.) that can store executable instructions (also referred to as program code) and data that may be produced or consumed during execution of program code.

In various embodiments, memory subsystem 524 can store program code implementing various logical modules associated with generating embeddings and interacting with quantum annealer system 504 to execute embeddings. For example, memory subsystem 524 can include a clique graph optimizer 532, a network graph generator 534, an embedding module 536, and an annealer interface module 538. Each module 532-538 can be implemented using computer-readable program code that, when executed by processor 522, causes processor 522 to perform particular operations as described below. Alternatively, some or all of modules 532-538 (or specific operations performed by a module) can be implemented using special-purpose logic circuits.

Clique graph optimizer 532 can perform generation of optimized embeddings of clique graphs of various sizes in QPU(s) 541 of quantum annealer system 504 and can store the clique-graph embeddings locally (e.g., within memory subsystem 524) and/or remotely (e.g., in library 506). As described below, clique graph optimizer 532 can be used to "precompute" optimized embeddings that can be stored for later use. In some embodiments, clique graph embeddings precomputed using clique graph optimizer 532 and stored in library 506 can be made accessible to various client computer systems (including but not limited to computer system 502) via network 508, and in some embodiments, clique graph optimizer 532 may be implemented and supported by the provider of quantum annealer system 504. As described below, in some embodiments, an optimized clique graph embedding may be associated with a specific instance of QPU 541.

Network graph generator 534 can compute a network graph representation of a specific optimization problem (e.g., a QUBO graph). In some embodiments, the optimization problem can be specified by a user via user interface 526. Depending on implementation, the problem can be specified in the QUBO formulation or in other formulations from which network graph generator 534 can produce a QUBO formulation and/or a corresponding network graph representation. A particular implementation of network graph generator 534 is not critical to understanding the present disclosure, and conventional or other implementations can be used.

Embedding module 536 can compute an embedding corresponding to an input network graph, which can be a network graph representation computed by network graph generator 534. In some embodiments, embedding module 536 can operate by retrieving an embedding of a clique graph having the same number of nodes as the input network graph from library 506, then modifying the clique graph to correspond to the input network graph, e.g., by modifying edge weights and/or removing edges. Examples are described below.

Annealer interface 538 can implement communications with quantum annealer system 504. For instance, annealer interface 538 can communicate an embedding (which can be generated by embedding module 536) to quantum annealer system 504 and provide related instructions regarding execution of the embedding (e.g., how many times to perform the annealing, which particular QPU 541 to use, etc.). Annealer interface 538 can also receive information from quantum annealer system 504, including results of execution of a embedding, error messages, and other information. In some implementations, annealer interface 538 may include code provided by the provider of quantum annealer system 504. The details of communication with quantum annealer system 504 are not critical to the present disclosure, and conventional or other implementations can be used.

System 500 is illustrative, and variations and modifications are possible. Different modules described herein can be implemented in the same computer system or different computer systems. For instance, clique graph embeddings can be computed using a first computer system and stored in library 506, while embedding module 536 is implemented in a second computer system that accesses library 506.

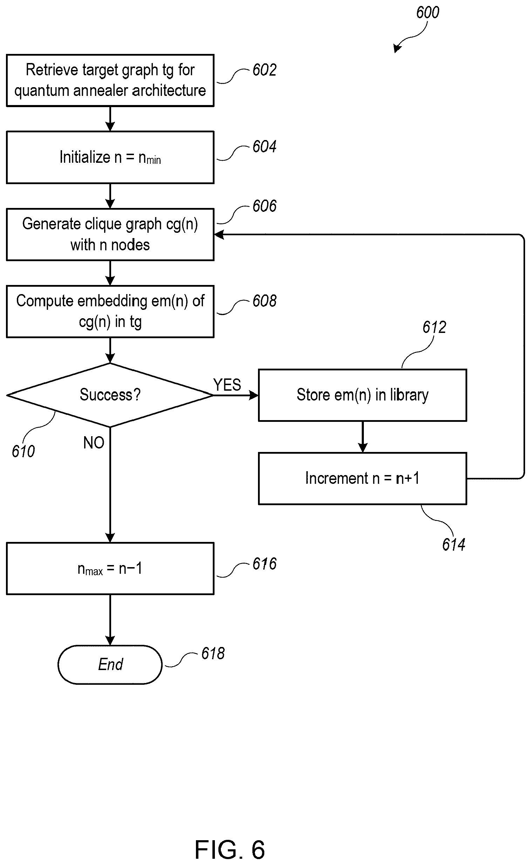

FIG. 6 shows a flow diagram of a process 600 for generating a library of optimized embeddings for clique graphs of varying sizes according to some embodiments. Process 600 can be implemented, e.g., using clique graph optimizer 532 of system 500 described above. In this example, process 600 generates optimized embeddings for clique graphs having a range of sizes in a target graph for a QPU 541.

At block 602, process 600 can retrieve a target graph (tg) for a QPU. For example, the provider of quantum annealer system 504 can generate a target graph representing a specific instance of QPU 541 (or an architecture common to multiple instances of QPU 541). The target graph can be a network graph representation (such as graph 200 of FIG. 2B) showing all of the physical connections among all of qubits of the QPU. Block 602 can include communicating with quantum annealer system 504 to obtain the target graph.

At block 604, process 600 can initialize a network graph size n to a minimum value ($n_{min}$). The minimum value can be a small number such as 3, 5, 7, or the like. The selection of $n_{min}$ is a matter of design choice and can be based on considerations such as the computation time required for computing an optimized embedding for a network graph of a given size. (For very small network graphs, computing an optimized embedding may be fast enough that precomputation is not regarded as advantageous.)

At block 606, process 600 can generate a clique graph cg($n$) having $n$ nodes. As used herein, a "clique graph," or fully-connected network graph, is a graph of n nodes in which, for each pair of nodes, there is an edge directly connecting the nodes. Clique graph cg($n$) can be an "unbiased" graph in which all nodes have equal bias and all edges have equal weight.

At block 608, process 600 can compute an embedding em($n$) of clique graph cg($n$) in target graph tg. Embedding em($n$) can be an optimized embedding, using criteria such as minimizing the mean length of chains or the length of the longest chain and/or other criteria. Existing or other algorithms and techniques for determining an optimized embedding of a given network graph into a given target graph can be used, and the particular algorithm can be selected for effectiveness of optimization rather than short execution time.

At block 610, process 600 can determine whether an embedding was successfully computed. Computation of an embedding may fail if the number of nodes and/or the number of edges in clique graph cg($n$) exceeds the physical limits of the QPU (which has a finite and fixed number of qubits and connections).

If the embedding was successfully computed, then at block 612, process 600 can store the embedding em($n$) in a library of embeddings (e.g., library 506 described above). Embeddings can be represented using various data structures in classical binary formats, and the particular data structure used is a matter of design choice. In some embodiments, suitable data structures for embeddings may have sizes up to a few kilobytes, allowing simple storage and retrieval systems to be used. Library 506 can store embeddings in any manner desired, and a given clique-graph embedding em(n) stored in library 506 can be retrievable by reference to the graph size $n$. At block 614, process 600 can increment network size n and return to block 606 to compute the next larger clique graph.

Process 600 can continue to generate embeddings em($n$) for increasing values of $n$ until an embedding fails. If, at block 610, an embedding fails (does not succeed), then at block 616, process 600 can set a maximum size parameter for the stored embeddings to represent the largest value for which embedding succeeded ($n_{max} = n - 1$ in this case), and process 600 can end at block 618. In some embodiments, process 600 can report $n_{max}$ as an output to a user and/or store $n_{max}$ as a parameter for subsequent use, e.g., in library 506.

Process 600 is illustrative, and variations and modifications are possible. Operations described sequentially can be performed in parallel, and order of operations can be varied to the extent that logic permits. For instance, depending on available resources, embeddings of cg(n) for different values of $n$ and/or embeddings in different target graphs tg can be computed in parallel. Process 600 can be repeated with different target graphs to generate a library that includes precomputed clique-graph embeddings for different QPU architectures and/or different instances of a QPU.

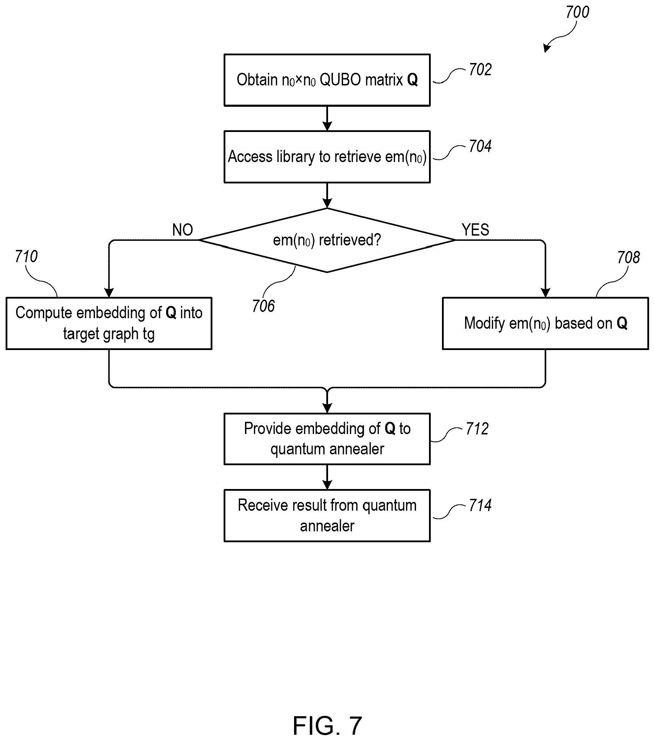

Once a library with one or more clique-graph embeddings em(n) has been created, the library can be used to facilitate computation of embeddings for specific optimization problems. FIG. 7 shows a flow diagram of a process 700 for computing an embedding for a specific problem according to some embodiments. Process 700 can be implemented, e.g., using embedding module 536 of system 500 described above.

At block 702, process 700 can obtain a QUBO matrix **Q** of size $n_0 \times n_0$ that represents a specific optimization problem. For example, the QUBO matrix can be generated using network graph generator 534, input by a user, or provided from another source.

At block 704, process 700 can access library 506 to retrieve a precomputed embedding em($n_0$) for a clique graph of size $n_0$. If, at block 706, the precomputed embedding em($n_0$) is retrieved, then at block 708, process 700 can modify precomputed embedding em($n_0$) based on the QUBO matrix **Q** to produce a problem-specific embedding. For instance, QUBO matrix **Q** can be understood as corresponding to a network graph having $n_0$ vertices and up to $n_0(n_0 - 1)/2$ edges connecting pairs of vertices. Edges in clique-graph embedding em($n_0$) that do not have corresponding edges in QUBO matrix **Q** can be removed. Edge weights and qubit biases can also be assigned to edges and individual qubits (or nodes) according to QUBO matrix **Q**. (In some embodiments, assigning an edge weight of 0 removes the edge.) Modification of a precomputed embedding in this manner can be a computationally simple (and therefore fast) process.

If, at block 706, the precomputed embedding em($n_0$) is not available from library 506, then at block 710, process 700 can obtain the target graph tg for the QPU and compute an embedding of QUBO matrix **Q** into target graph tg, e.g., using the same algorithms and techniques used at block 608 of process 600. In some cases, precomputed embeddings might not be available for $n_0 < n_{min}$, and as noted above, $n_{min}$ may be chosen such that computing an optimal embedding for a specific matrix **Q** is relatively straightforward. Conversely, precomputed embeddings might not be available for $n_0 > n_{max}$, however it may still be possible to compute an embedding for a particular QUBO matrix **Q** having $n_0 > n_{max}$, depending on the number of edges (nonzero elements) in the QUBO matrix and the number and connectivity of qubits in the QPU. There may be other instances where a precomputed embedding is not available, for example, for a new QPU instance or a new QPU architecture for which clique-graph embeddings have not yet been added to library 506.

At block 716, process 700 can provide the embedding of QUBO matrix Q (regardless of how the embedding was computed) to quantum annealer system 504 for execution. Quantum annealer system 504 can execute the embedding, and at block 718, process 700 can receive a result of the execution from quantum annealer system 504. Assuming successful execution, the result provides a solution to the QUBO problem represented by matrix **Q.**

Process 700 is illustrative, and variations and modifications are possible. Operations described sequentially can be performed in parallel, and order of operations can be varied to the extent that logic permits. Process 700 can be executed for any QUBO problem and any QPU hardware. In some embodiments, library 506 can store precomputed embeddings for multiple different QPU architectures or multiple specific QPU instances, and accessing the library to retrieve a precomputed embedding can include specifying the particular QPU architecture or QPU instance that is to be used for executing the embedding.

### Updating a Library of Embeddings

Precomputed embeddings can be stored indefinitely in library 506. From time to time, it may be desirable to recompute the stored embeddings. For example, the precomputed embeddings may be optimized for a particular QPU instance, and performance of the QPU instance may change over time. If desired, embeddings can be recomputed as updated information on QPU performance characteristics becomes available. For instance, an operator of quantum annealer system 504 may perform periodic calibration, maintenance, or testing that may identify or correct various issues such as dysfunctional or non-functional qubits and/or coupling channels in a particular QPU instance. The target graph for the QPU instance can be updated to reflect this new information, and the library embeddings can be recomputed using the updated target graph.

As another example, when a new QPU instance is deployed, precomputed embeddings for a different QPU instance having the same architecture can be heuristically converted to the new QPU instance and used until a new set of clique-graph embeddings optimized for the new QPU instance is computed.

In some embodiments, problem-specific embeddings (e.g., embeddings computed using process 700) can be stored in addition to the precomputed clique-graph embeddings. This can save additional time in instances where multiple problems having similar network graphs (e.g., same connectivity but different edge weights) are to be solved. When the precomputed clique-graph embeddings are updated, any stored problem-specific embeddings can be invalidated or recomputed.

**Additional Embodiments**

While the invention has been described with reference to specific embodiments, those skilled in the art will appreciate that variations and modifications are possible.

A library can be implemented using any non-transitory computer-readable storage medium that has sufficient capacity to store the desired set of precomputed embeddings and that supports random-access retrieval of a particular embedding. The particular storage medium and/or format for the embeddings can be chosen as desired. In some embodiments, a library can be implemented using a server architecture that returns data in response to requests from client computers, which may be local to or remote from the server. In various embodiments, the library can be created and maintained by the provider of the quantum annealer system(s) to which the library applies, by another party that regularly uses the quantum annealer system(s) as a service, or by a third party as a service to users of the quantum annealer system(s).

All processes described herein are also illustrative and can be modified. Operations can be performed in a different order from that described, to the extent that logic permits; operations described above may be omitted or combined; operations described sequentially may be performed in parallel; and operations not expressly described may be added.

While various circuits and components are described herein with reference to particular blocks, it is to be understood that these blocks are defined for convenience of description and are not intended to imply a particular physical arrangement of component parts. The blocks need not correspond to physically distinct components, and the same physical components can be used to implement aspects of multiple blocks. Components described as dedicated or fixed-function circuits can be configured to perform operations by providing a suitable arrangement of circuit components (e.g., logic gates, registers, switches, etc.); automated design tools can be used to generate appropriate arrangements of circuit components implementing operations described herein. Components described as processors or microprocessors can be configured to perform operations described herein by providing suitable program code. Various blocks might or might not be reconfigurable depending on how the initial configuration is obtained. Embodiments of the present invention can be realized in a variety of apparatus including electronic devices implemented using a combination of circuitry and software.

Computer programs incorporating features of the present invention that can be implemented using program code may be encoded and stored on various computer readable storage media; suitable media include magnetic disk or tape, optical storage media such as compact disk (CD) or DVD (digital versatile disk), flash memory, and other non-transitory media. (It is understood that "storage" of data is distinct from propagation of data using transitory media such as carrier waves.) Computer readable media encoded with the program code may include an internal storage medium of a compatible electronic device and/or external storage media readable by the electronic device that can execute the code. In some instances, program code can be supplied to the electronic device via Internet download or other transmission paths.

Accordingly, although the invention has been described with respect to specific embodiments, it will be appreciated that the invention is intended to cover all modifications and equivalents within the scope of the following claims.

An itemized list of exemplary embodiments is presented below.

1. A method comprising:

obtaining, by a computer system, an input representing a particular optimization problem, wherein the particular optimization problem maps to an input network graph having a number ($n_0$) of nodes;
accessing, by the computer system, a library of precomputed embeddings that includes a precomputed embedding of each of a plurality of clique graphs in a target graph representing a quantum processor architecture, wherein different clique graphs in the plurality of clique graphs have different numbers of nodes;
retrieving from the library, by the computer system, a first precomputed embedding of a clique graph having the number $n_0$ of nodes;
executing, by the computer system, an operation to modify the first precomputed embedding based on the input network graph, thereby computing a problem-specific embedding;
providing, by the computer system, the problem-specific embedding to a quantum annealer system having a quantum processor with the architecture represented by the target graph; and
receiving, by the computer system, a result from the quantum annealer system, wherein the result represents a solution to the particular optimization problem.

2. The method of item 1 further comprising, prior to obtaining the input:

for each of a plurality of numbers ($n$), computing, by the computer system, an embedding in the target graph of a clique graph having the number $n$ of nodes; and
storing the computed embeddings in the library.

3. The method of item 2 wherein the plurality of numbers n includes all integers $n$ for which $n_{min} \leq n \leq n_{max}$, wherein:

$n_{min}$ is a preselected minimum number; and
$n_{max}$ is a largest number for which an embedding of a clique graph having $n_{max}$ nodes in the target graph exists.

4. The method of item 1 wherein the target graph is specific to a particular instance of a quantum processor.
5. The method of item 4 wherein the library includes precomputed embeddings for two or more different instances of the quantum processor and wherein accessing the library includes specifying one particular instance of the quantum processor.
6. The method of item 1 wherein the target graph is specific to a particular quantum processor architecture.
7. The method of item 6 wherein the library includes precomputed embeddings for two or more different quantum processor architectures and wherein accessing the library includes specifying one particular quantum processor architecture.
8. A method comprising:

obtaining, by a computer system, a first target graph representing a first quantum processor architecture;
computing, by the computer system, a first set of optimized embeddings, wherein computing the first set of optimized embeddings includes, for each of a plurality of integer numbers $n$, computing, by the computer system, an optimized embedding in the first target graph of a clique graph having the number $n$ of nodes; and
storing, by the computer system, the first set of optimized embeddings in a library.

9. The method of item 8 further comprising:

receiving, by the computer system, a request from a client for a stored embedding, the request specifying a number $n_0$ of nodes;
retrieving, by the computer system, the optimized embedding having the number $n_0$ of nodes from the library; and
communicating, from the computer system to the client, the optimized embedding having the number $n_0$ of nodes.

10. The method of item 8 wherein the first target graph represents a first specific quantum processor having the first quantum processor architecture and wherein the method further comprises:

obtaining, by the computer system, a second target graph representing a second specific quantum processor having the first quantum processor architecture;
computing a second set of optimized embeddings, wherein computing the second set of optimized embeddings includes, for each of a plurality of integer numbers $n$, computing, by the computer system, an optimized embedding in the second target graph of a fully connected network graph having the number $n$ of nodes; and
storing, by the computer system, the second set of optimized embeddings in the library.

11. The method of item 10 further comprising:

receiving, by the computer system, a request from a client for a stored embedding, the request specifying a number $n_0$ of nodes and a particular quantum processor;

selecting, by the computer system, one of the first set or the second set of optimized embeddings based on the particular quantum processor specified in the request;

retrieving, by the computer system, the optimized embedding having the number $n_0$ of nodes from the selected set of optimized embeddings; and

communicating, from the computer system to the client, the optimized embedding having the number $n_0$ of nodes.

12. The method of item 8 further comprising:

obtaining, by a computer system, a second target graph representing a second quantum processor architecture;

computing a second set of optimized embeddings, wherein computing the second set of optimized embeddings includes, for each of a plurality of integer numbers $n$, computing, by the computer system, an optimized embedding in the second target graph of a fully connected network graph having the number n of nodes; and

storing, by the computer system, the second set of optimized embeddings in the library.

13. The method of item 12 further comprising:

receiving, by the computer system, a request from a client for a stored embedding, the request specifying a number $n_0$ of nodes and a particular quantum processor architecture;

selecting, by the computer system, one of the first set or the second set of optimized embeddings based on the particular quantum processor architecture specified in the request;

retrieving, by the computer system, the optimized embedding having the number $n_0$ of nodes from the selected set of optimized embeddings; and

communicating, from the computer system to the client, the optimized embedding having the number $n_0$ of nodes.

14. A system comprising:

a memory;

a processor coupled to the memory and configured to:

obtain an input representing a particular optimization problem, wherein the particular optimization problem maps to an input network graph having a number ($n_0$) of nodes;

access a library of precomputed embeddings that includes a precomputed embedding of each of a plurality of clique graphs in a target graph representing an architecture of a quantum processor, wherein different clique graphs in the plurality of clique graphs have different numbers of nodes;

retrieve from the library a first precomputed embedding of a clique graph having the number $n_0$ of nodes; the first precomputed embedding based on the input network graph, thereby computing a problem-specific embedding;

provide the problem-specific embedding to a quantum annealer system having a quantum processor with the architecture represented by the target graph; and

receive a result from the quantum annealer, wherein the result represents a solution to the particular optimization problem.

15. The system of item 14 wherein the processor is further configured to, prior to obtaining the input:

compute, for each of a plurality of numbers (n), an embedding in the target graph of a clique graph having the number n of nodes; and

store the computed embeddings in the library.

16. The system of item 15 wherein the plurality of numbers n includes all integers $n$ for which $n_{min} \leq n \leq n_{max}$, wherein:

$n_{min}$ is a preselected minimum number; and

$n_{max}$ is a largest number for which an embedding of a clique graph having $n_{max}$ nodes in the target graph exists.

17. The system of item 14 wherein the target graph is specific to a particular instance of a quantum processor.

18. The system of item 17 wherein the library includes precomputed embeddings for two or more different instances of the quantum processor and wherein the processor is further configured such that accessing the library includes specifying the particular instance of the quantum processor.

19. The system of item 14 wherein the target graph is specific to a particular quantum processor architecture.

20. The system of item 19 wherein the library includes precomputed embeddings for two or more different quantum processor architectures and wherein the processor is further configured such that accessing the library includes specifying one particular quantum processor architecture.

**Claims**

1. A method comprising:

   obtaining, by a computer system, an input representing a particular optimization problem, wherein the particular optimization problem maps to an input network graph having a number ($n_0$) of nodes;
   accessing, by the computer system, a library of precomputed embeddings that includes a precomputed embedding of each of a plurality of clique graphs in a target graph representing a quantum processor architecture, wherein different clique graphs in the plurality of clique graphs have different numbers of nodes;
   retrieving from the library, by the computer system, a first precomputed embedding of a clique graph having the number $n_0$ of nodes;
   executing, by the computer system, an operation to modify the first precomputed embedding based on the input network graph, thereby computing a problem-specific embedding;
   providing, by the computer system, the problem-specific embedding to a quantum annealer system having a quantum processor with the architecture represented by the target graph; and
   receiving, by the computer system, a result from the quantum annealer system, wherein the result represents a solution to the particular optimization problem.

2. The method of claim 1 further comprising, prior to obtaining the input:

   for each of a plurality of numbers ($n$), computing, by the computer system, an embedding in the target graph of a clique graph having the number $n$ of nodes; and
   storing the computed embeddings in the library.

3. The method of claim 2 wherein the plurality of numbers n includes all integers $n$ for which $n_{min} \leq n \leq n_{max}$, wherein:

   $n_{min}$ is a preselected minimum number; and
   $n_{max}$ is a largest number for which an embedding of a clique graph having $n_{max}$ nodes in the target graph exists.

4. The method of claim 1 wherein the target graph is specific to a particular instance of a quantum processor.

5. The method of claim 4 wherein the library includes precomputed embeddings for two or more different instances of the quantum processor and wherein accessing the library includes specifying one particular instance of the quantum processor.

6. The method of claim 1 wherein the target graph is specific to a particular quantum processor architecture.

7. The method of claim 6 wherein the library includes precomputed embeddings for two or more different quantum processor architectures and wherein accessing the library includes specifying one particular quantum processor architecture.

8. A method comprising:

   obtaining, by a computer system, a first target graph representing a first quantum processor architecture;
   computing, by the computer system, a first set of optimized embeddings, wherein computing the first set of optimized embeddings includes, for each of a plurality of integer numbers $n$, computing, by the computer system, an optimized embedding in the first target graph of a clique graph having the number n of nodes; and
   storing, by the computer system, the first set of optimized embeddings in a library.

9. The method of claim 8 further comprising:

   receiving, by the computer system, a request from a client for a stored embedding, the request specifying a number $n_0$ of nodes;

retrieving, by the computer system, the optimized embedding having the number $n_0$ of nodes from the library; and
communicating, from the computer system to the client, the optimized embedding having the number $n_0$ of nodes.

10. The method of claim 8 wherein the first target graph represents a first specific quantum processor having the first quantum processor architecture and wherein the method further comprises:

obtaining, by the computer system, a second target graph representing a second specific quantum processor having the first quantum processor architecture;
computing a second set of optimized embeddings, wherein computing the second set of optimized embeddings includes, for each of a plurality of integer numbers $n$, computing, by the computer system, an optimized embedding in the second target graph of a fully connected network graph having the number $n$ of nodes; and
storing, by the computer system, the second set of optimized embeddings in the library.

11. The method of claim 10 further comprising:

receiving, by the computer system, a request from a client for a stored embedding, the request specifying a number $n_0$ of nodes and a particular quantum processor;
selecting, by the computer system, one of the first set or the second set of optimized embeddings based on the particular quantum processor specified in the request;
retrieving, by the computer system, the optimized embedding having the number $n_0$ of nodes from the selected set of optimized embeddings; and
communicating, from the computer system to the client, the optimized embedding having the number $n_0$ of nodes.

12. The method of claim 8 further comprising:

obtaining, by a computer system, a second target graph representing a second quantum processor architecture;
computing a second set of optimized embeddings, wherein computing the second set of optimized embeddings includes, for each of a plurality of integer numbers $n$, computing, by the computer system, an optimized embedding in the second target graph of a fully connected network graph having the number $n$ of nodes; and
storing, by the computer system, the second set of optimized embeddings in the library.

13. The method of claim 12 further comprising:

receiving, by the computer system, a request from a client for a stored embedding, the request specifying a number $n_0$ of nodes and a particular quantum processor architecture;
selecting, by the computer system, one of the first set or the second set of optimized embeddings based on the particular quantum processor architecture specified in the request;
retrieving, by the computer system, the optimized embedding having the number $n_0$ of nodes from the selected set of optimized embeddings; and
communicating, from the computer system to the client, the optimized embedding having the number $n_0$ of nodes.

14. A system comprising:

a memory;
a processor coupled to the memory and configured to:

obtain an input representing a particular optimization problem, wherein the particular optimization problem maps to an input network graph having a number ($n_0$) of nodes;
access a library of precomputed embeddings that includes a precomputed embedding of each of a plurality of clique graphs in a target graph representing an architecture of a quantum processor, wherein different clique graphs in the plurality of clique graphs have different numbers of nodes;
retrieve from the library a first precomputed embedding of a clique graph having the number $n_0$ of nodes;
execute an operation to modify the first precomputed embedding based on the input network graph, thereby computing a problem-specific embedding;
provide the problem-specific embedding to a quantum annealer system having a quantum processor with the architecture represented by the target graph; and
receive a result from the quantum annealer, wherein the result represents a solution to the particular optimization problem.

**15.** The system of claim 14 wherein the processor is further configured to, prior to obtaining the input:

compute, for each of a plurality of numbers ($n$), an embedding in the target graph of a clique graph having the number $n$ of nodes; and
store the computed embeddings in the library.

FIG. 1

FIG. 2A

FIG. 2B

FIG. 3A

FIG. 3B

FIG. 4

500

COMPUTER SYSTEM    502

PROCESSOR
522

USER INTERFACE
526

MEMORY    524

532 —— CLIQUE GRAPH
OPTIMIZER

534 —— NETWORK GRAPH
GENERATOR

536 —— EMBEDDING

538 —— ANNEALER
INTERFACE

NETWORK
508

504 —— QUANTUM ANNEALER
SYSTEM

541 —— QPU

506

LIBRARY
OF
EMBEDDINGS

FIG. 5

FIG. 6

FIG. 7

Europäisches
Patentamt
European
Patent Office
Office européen
des brevets

# EUROPEAN SEARCH REPORT

Application Number

EP 23 20 9864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/349282 A1 (BRAHM JAMES W [US] ET AL) 6 December 2018 (2018-12-06) <br> * paragraph [0018] – paragraph [0043] * <br> * figures 1-3 * <br> ----- | 1-15 | INV. <br> G06N10/20 |

TECHNICAL FIELDS
SEARCHED      (IPC)

G06N

The present search report has been drawn up for all claims

| Place of search | Date of completion of the search | Examiner |
|---|---|---|
| The Hague | 22 March 2024 | Baldan, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 20 9864

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | Publication date | Patent family member(s) | Publication date |
|---|---|---|---|
| US 2018349282 A1 | 06-12-2018 | NONE | |

EPO FORM P0459